# EUROPEAN PATENT SPECIFICATION

(11) **EP 1 426 583 B1**
(45) Date of publication and mention of the grant of the patent: **17.06.2009**
(21) Application number: 02736192.2
(22) Date of filing: 27.06.2002
(51) Int. Cl.: F02B 67/06, F16H 7/18

(54) **CAM CHAIN DETACHMENT PREVENTIVE STRUCTURE**
KONSTRUKTION ZUR VERHINDERUNG DES LÖSENS EINER NOCKENKETTE
STRUCTURE ANTI-DERAILLEMENT DE LA CHAINE D'ARBRE A CAME

(30) Priority: 12.09.2001 JP 2001277299
(43) Date of publication of application: 09.06.2004
(73) Proprietor: HONDA GIKEN KOGYO KABUSHIKI KAISHA, Minato-ku, Tokyo 107-8556 (JP)
(72) Inventor: ISHIZAKA, Takashi, K. K. Honda Gijutsu Kenkyusho, Wako-shi, Saitama 351-0193 (JP); WASADA, Yuichi, c/o K. K. Honda Gijutsu Kenkyusho, Wako-shi, Saitama 351-0193 (JP); KOBAYASHI, H., c/o K. K. Honda Gijutsu Kenkyusho, Wako-shi, Saitama 351-0193 (JP); KANEISHI, Takashi, K. K. Honda Gijutsu Kenkyusho, Wako-shi, Saitama 351-0193 (JP)
(74) Representative: Cheyne, John Robert Alexander M.
(86) International application number: PCT/JP2002/006497
(87) International publication number: WO 2003/025366

(56) References cited:
- JP-A- 2000 303 906
- JP-U- 61 041 947

## Description

### TECHNICAL FIELD

The present invention relates to a camshaft timing chain retaining mechanism for a valve train included in an OHC internal combustion engine for a motorcycle.

### BACKGROUND ART

Most OHC internal combustion engines use a camshaft timing chain for transmitting rotative driving force of a crankshaft to a camshaft to drive intake and exhaust valves for predetermined timed operations. The camshaft timing chain is extended between a drive sprocket mounted on the crankshaft, and a driven sprocket mounted on the camshaft. When assembling the internal combustion engine, the camshaft timing chain wound round the drive sprocket in the crankcase is pulled outside through the cylinder block, and is wound round the driven sprocket after attaching the cylinder head to the cylinder block.

The camshaft timing chain wound round the drive sprocket is liable to come off the drive sprocket when the same is pulled outside through the cylinder block. If the camshaft timing chain falls off the drive sprocket, the cylinder block must be removed from the crankcase to wind the camshaft timing chain again round the drive sprocket, which requires troublesome work.

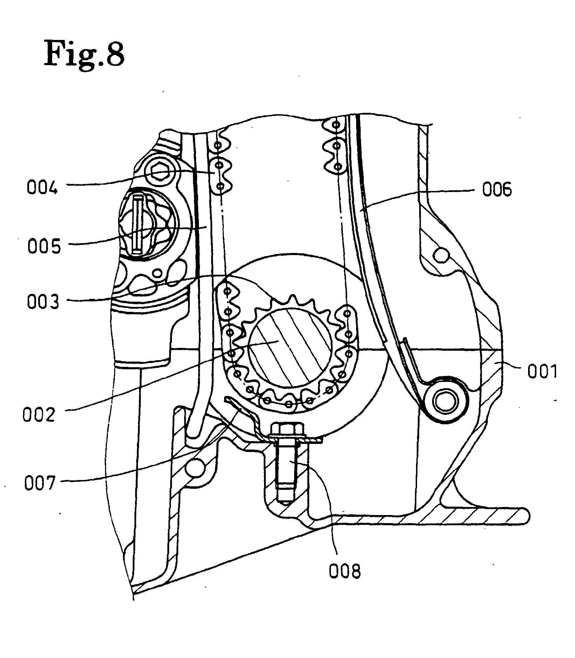

Fig. 8 is a sectional view of a crankcase 001 included in an OHC internal combustion engine for a motorcycle, showing a camshaft timing chain retaining mechanism disclosed in JP-A No. 303906/2000, taken on a plane including a camshaft timing chain. A camshaft timing chain 004 is extended between a drive sprocket 003 mounted on a crankshaft 002, and a driven sprocket mounted on a camshaft. A chain guide 005 is disposed on the left side, as viewed in Fig. 8, and a chain tensioner 006 is disposed on the right side, as viewed in Fig. 8. A camshaft timing chain retaining plate 007 is disposed near the outer side of the camshaft timing chain 004 and is fastened to the crankcase 001 with a bolt 008 to prevent the camshaft timing chain 004 from falling off the drive sprocket 002.

The crankshaft 002 is supported on the crankcase by two rolling bearings. The outer and the inner bearing member of one of the two rolling bearings are mounted in a press fit, while either the outer or the inner bearing member of the other rolling member is mounted in a sliding fit. Therefore, the crankshaft has an axial play and is capable of axial movement. The crankshaft is restrained from axial movement by a push plug. A push plug holding plate is used to push the push plug with a coil spring. The push plug holding plate and the camshaft timing chain retaining plate are separate members.

In the prior art internal combustion engine, the push plug holding plate and the camshaft timing chain retaining plate are disposed separately. If the push plug holding plate and the camshaft timing chain retaining plate could be replaced with a single member, the number of parts and assembling work can be reduced and, consequently, productivity can be improved. Accordingly, it is an object of the present invention to provide a camshaft timing chain retaining mechanism for retaining a camshaft timing chain of a valve train included in an OHC internal combustion engine for a motorcycle in place, including a reduced number of parts, requiring reduced assembling work, and capable of being produced at an improved productivity.

### DISCLOSURE OF THE INVENTION

To solve the foregoing problems, the present invention provides a camshaft timing chain retaining mechanism for retaining a camshaft timing chain included in a valve train included in an OHC internal combustion engine on a drive sprocket mounted on a crankshaft supported for rotation by rolling bearings on a crankcase, including a camshaft timing chain retaining plate disposed near the drive sprocket; wherein the camshaft timing chain retaining plate is capable of serving also as a push plug holding plate for holding a push plug pressed against the rolling bearing to restrain the rolling bearing from axial movement.

The camshaft timing chain retaining mechanism of the present invention thus constructed reduces the number of parts and assembling work, and improves productivity.

In the camshaft timing chain retaining mechanism of the present invention, the camshaft timing chain retaining plate may have a main part fixed to the crankcase so as to be in contact with the push plug, and an end part extending from the main part to a position beside an end surface of the drive sprocket.

In the camshaft timing chain retaining mechanism of the present invention, the camshaft timing chain retaining plate may have a main part fixed to the crankcase so as to be in contact with the push plug, and an end part extending from the main part to a position diametrically near the drive sprocket.

### BRIEF DESCRIPTION OF THE DRAWINGS

Fig. 1 is a sectional view of a crankcase included in an OHC internal combustion engine for a motorcycle, provided with a camshaft timing chain retaining mechanism in a first embodiment according to the present invention taken on a plane including a camshaft timing chain;
Fig. 2 is an enlarged front elevation of a mechanism disposed in a crankcase;
Fig. 3 is a sectional view taken on line III-III in Fig. 2;
Fig. 4a is a front elevation of a camshaft timing chain retaining plate included in the first embodiment;
Fig. 4b is a longitudinal sectional view of the camshaft timing chain retaining plate shown in Fig. 4a;
Fig. 5 is a sectional view of a crankcase included in an OHC internal combustion engine for a motorcycle, provided with a camshaft timing chain retaining mechanism in a second embodiment according to the present invention taken on a plane including a camshaft timing chain;
Fig. 6 is a sectional view taken on line VI-VI in Fig. 5;
Fig. 7a is a front elevation of the camshaft timing chain retaining plate included in the second embodiment;
Fig. 7b is a longitudinal sectional view of the camshaft timing chain retaining plate shown in Fig. 7a; and
Fig. 8 is a sectional view of a crankcase included in a prior art OHC internal combustion engine for a motorcycle.

### BEST MODE FOR CARRYING OUT THE INVENTION

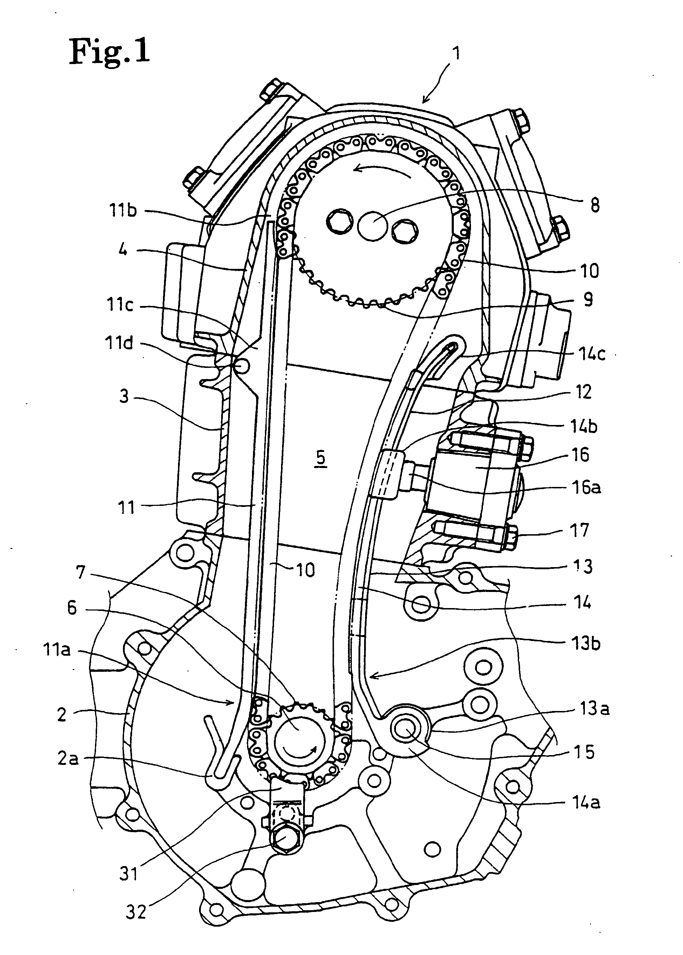

Fig. 1 is a sectional view of a crankcase included in an OHC internal combustion engine for a motorcycle, provided with a camshaft timing chain retaining mechanism in a first embodiment of the present invention taken on a plane including a camshaft timing chain. The internal combustion engine 1 is assembled by stacking a crankcase 2, a cylinder block 3 and a cylinder head 3 in that order. A chain chamber 5 extends through the cylinder block between the crankcase 2 and the cylinder head 3.

One end part of a crankshaft 6 projects into a lower section, corresponding to the crankcase 2, of the chain chamber 5, and a drive sprocket 7 is mounted on the end part of the crankshaft 6. One end part of a camshaft 8 supported on the cylinder head 4 projects into an upper section, corresponding to the cylinder head 4, of the chain chamber 5, and a driven sprocket 9 is mounted on the end part of the camshaft 6. A camshaft timing chain 10 is extended between the drive sprocket 7 and the driven sprocket 9 to drive the camshaft 8 for rotation in the direction of the arrow.

A chain guide 11 of a synthetic resin is disposed beside a tight side, i.e. , a side pulled by the drive sprocket 7, of the camshaft timing chain 10 to guide the camshaft timing chain 10. The chain guide 11 has a gently curved part 11a near one end thereof. An end part, extending from the curved part 11a, of the chain guide 11 is supported in a recess 2a formed in a part, in the chain chamber 5, of the crankcase 2. The other end 11b of the chain guide 11 is a free end. A support lug 11c is formed in a part of the chain guide 11 near the other end of the same. A pin 11d passed through the support lug 11c supports the chain guide 11 on the cylinder block 3. The chain guide 11 has a substantially straight guide part provided in its guide surface with a guide groove of a width corresponding to that of the camshaft timing chain 10. The camshaft timing chain 10 slides along the bottom of the guide groove. Sidewalls of a low height of the guide groove of the chain guide 11 prevent the camshaft timing chain from falling off the sprockets 7 and 9.

A camshaft timing chain tensioner 12 is pressed against the outer surface of the slack side, extending between the push side of the drive sprocket 7 and the driven sprocket 9, of the camshaft timing chain 10 by a hydraulic tensioner lifter 16 to take up a slack in the slack side of the camshaft timing chain 10. The tensioner lifter 16 is fastened to the cylinder block 3 with bolts 17 in the chain chamber 5. The tensioner lifter 16 is provided with a push rod 16a. The push rod 16a is pushed by hydraulic power so as to project into the chain chamber 5.

The camshaft timing chain tensioner 12 has an arm 13 formed of an elastic material, and a shoe 14 formed of a synthetic resin and attached to a surface facing the camshaft timing chain 10 of the arm 13. A bend 13b is formed in a base end part 13a, on the side of the drive sprocket 7, of the of the arm 13 of the camshaft timing chain tensioner 12, and a bend is formed in a base end part 14a of the shoe 14 so as to extend in parallel to the base end part 13a. The base end parts 13a and 14a are fastened together to the crankcase 2 with a bolt 15.

A U-shaped arm 14b is formed in a middle part of the shoe 14. The U-shaped arm 14b extends on the opposite sides of the arm 13 toward the tensioner lifter 16 on the side opposite to the camshaft timing chain 10. The push rod 16a of the tensioner lifter 16 is pressed against the free end of the U-shaped arm 14b. One end part, i.e., an upper end part as viewed in Fig. 1, of the shoe 14 is bent in a U-shaped hook 14c. An end part of the arm 13 corresponding to the hook 14c is engaged in the hook 14c. A groove of a width substantially equal to that of the camshaft timing chain 10 is formed in the working surface of the shoe 14 facing the camshaft timing chain 10. The camshaft timing chain 10 slides along the bottom of the groove of the shoe 14. Sidewalls of a low height of the groove of the shoe 14 prevent the camshaft timing chain 10 from falling off the sprockets 7 and 9. A push plug holding plate 31 serving also as a camshaft timing chain retaining plate is fastened to the crankcase 2 with a bolt 32 at a position near a part, passing around the drive sprocket 7, of the camshaft timing chain 10. The push plug holding plate 31 serves both as a retaining means for retaining the camshaft timing chain 10 on the drive sprocket 7 and as a holding means for holding a push plug.

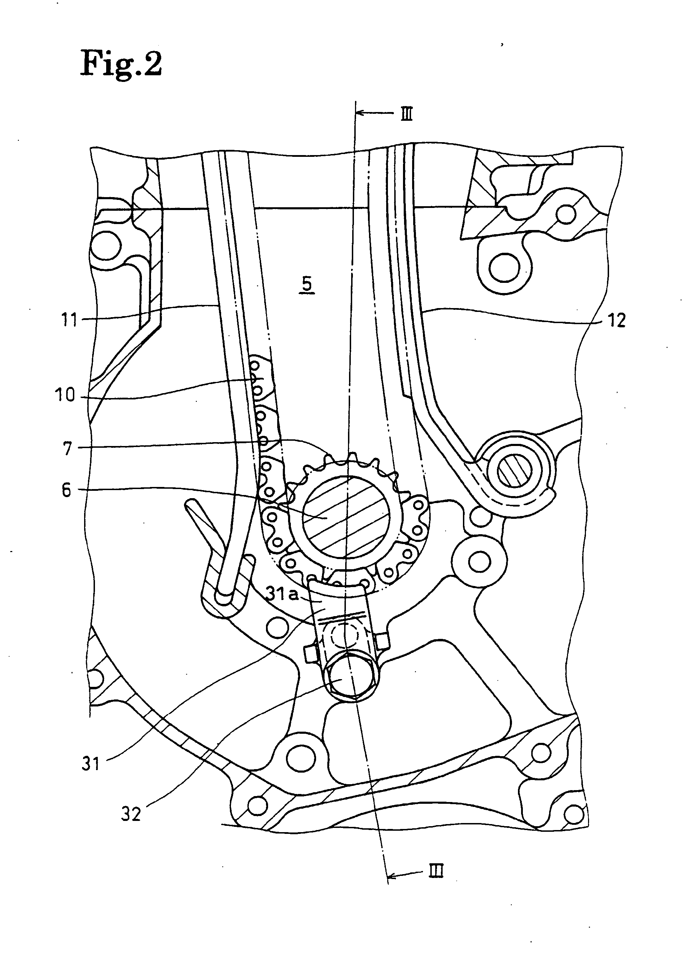

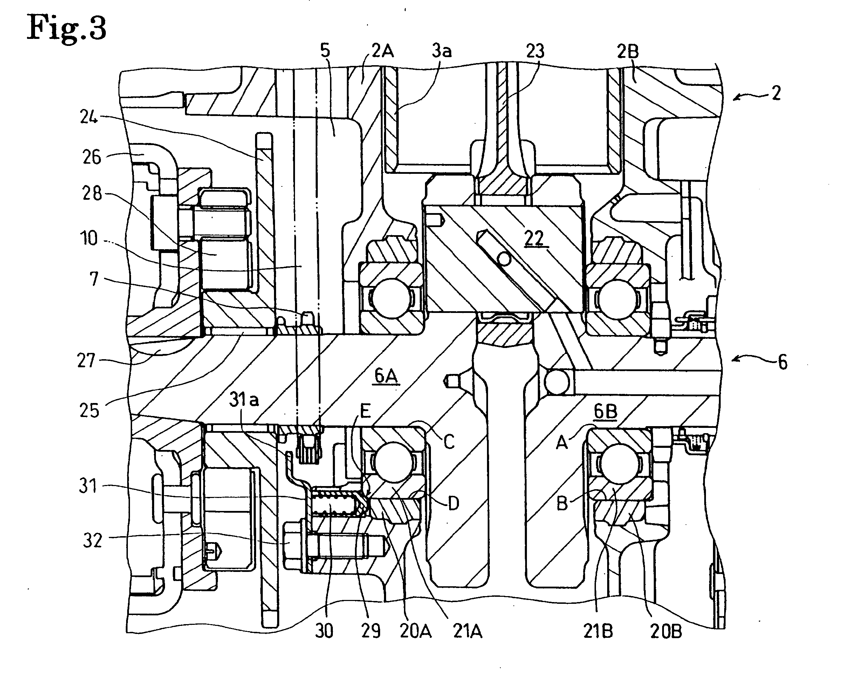

Fig. 2 is an enlarged view of a part of the interior of the crankcase 2 shown in Fig. 1, and Fig. 3 is a sectional view taken on line III-III in Fig. 2. As shown in Fig. 3, the crankshaft 6 consists of a left part 6A, as viewed in Fig. 3, a right part 6B, as viewed in Fig. 3, and a crankpin 22 connecting the parts 6A and 6B. The crankshaft 6 is assembled before installing the same in the crankcase 2. The crankcase 2 has a left half case 2A and a right half case 2B. The half cases 2A and 2B are joined together when installing the crankshaft 6 in the crankcase 2. Steel bushings 20A and 20B are incorporated into the half cases 2A and 2B, respectively, when casting the half cases 2A and 2B. The crankshaft 6 is supported in rolling bearings 21A and 21B fitted in the steel bushings 20A and 20B, respectively. The cylinder block 3, not shown in Fig. 3, is joined to the upper end of the crankcase 2. A cylinder liner 3a is fitted in a cylinder bore formed in the cylinder block 3. A lower end part of the cylinder liner 3a projects into the crankcase 2. A piston, not shown, axially slidably fitted in the cylinder liner 3a is connected to the crankpin 22 by a connecting rod 23. The chain chamber 5 extends through the cylinder block 3 between the crankcase 2 and the cylinder head 4. The left part 6A of the crankshaft 6 projects into the chain chamber 5. The drive sprocket 7 is mounted on the left part 6A of the crankshaft 6 in the chain chamber 5. The camshaft timing chain 10 is extended between the drive sprocket 7 and the driven sprocket 9 as shown in Fig. 1.

A driven gear 24 for a starter is supported on a bearing 25 mounted on the left part 6A of the crankshaft 6. An outer rotor 26 included in an alternator is secured to the left part 6A of the crankshaft 6 by a key 27. A one-way clutch 28 is interposed between the driven gear 24 of the starter and the outer rotor 26 of the alternator.

When assembling the internal combustion engine, a right rolling bearing 21B is fitted in a press fit in the steel bushing 20B incorporated in the right half case 2B of the crankcase 2, and a left rolling bearing 21A is put on the left part 6A of the crankshaft 6 in a press fit before installing the crankshaft 6 in the half cases 2A and 2B.

When installing the crankshaft 6 in the crankcase 2, the right part 6B of the crankshaft 6 is inserted in a press fit in the right rolling bearing 21B fitted beforehand in the right half case 2B. Then, the left half case 2A is put in a sliding fit on the left rolling bearing 21A mounted beforehand in a press fit on the left part 6A of the crankshaft 6. Then the driven gear 24 of the starter, the one-way clutch 28 and the outer rotor 26 of the alternator are mounted on the left part 6A of the crankshaft 6.

Thus, a tight joint A (Fig.3) is formed between the right rolling bearing 21B and the right part 6B of the crankshaft 6, a tight joint B is formed between the right rolling bearing 21B and the right steel bushing 20B, a tight joint C is formed between the left rolling bearing 21A and the left part 6A of the crankshaft 6, and a loose joint D is formed between the left rolling bearing 21A and the left steel bushing 20A. Therefore, it is possible that the rolling bearing moves axially.

A push plug 29 is supported on the left half case 2A and is pressed against the left rolling bearing 21A through a coil spring 30 by the push plug holding plate 31 to restrain the left rolling bearing 21A from axial movement. The push plug holding plate 31 is fastened to the left half case 2A with a bolt 32. The push plug 29 has a tapered end surface E pressed against the shoulder of the outer race of the left rolling bearing 21A to restrain the left rolling bearing 21A from axial movement.

As shown in Figs. 2 and 3, an end part 31a of the push plug holding plate 31 extends to a position beside the camshaft timing chain 10 wound around the drive sprocket 7. In this embodiment, the end part 31a extending to the position beside the camshaft timing chain 10 is bent in an L-shape. When assembling the internal combustion engine, the camshaft timing chain 10 wound around the drive sprocket 7 in the crankcase 2 is pulled outside through the cylinder block 3, the cylinder head 4 is joined to the cylinder block 3, and then the camshaft timing chain 10 is wound around the driven sprocket 9. When drawing out the camshaft timing chain 10 wound around the drive sprocket 7 from the cylinder block 3, the camshaft timing chain 10 is liable to fall off the drive sprocket 7. If the camshaft timing chain 10 falls off the drive sprocket 7, the cylinder block 3 needs to be disconnected from the crankcase 2 to wind the camshaft timing chain 10 again around the drive sprocket 7, which requires troublesome work. In this embodiment, the end part 31a of the push plug holding plate 31 serves as a camshaft timing chain retaining plate that prevents the camshaft timing chain 10 from falling off the drive sprocket 7. Thus, the camshaft timing chain 10 is unable to fall off the drive sprocket 7.

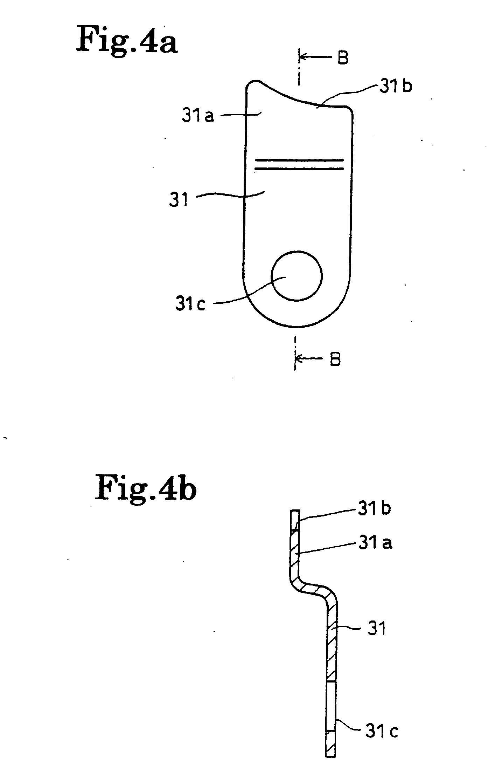

Figs. 4a and 4B are a front elevation and a longitudinal sectional view, respectively, of the push plug holding plate 31 serving also as a camshaft timing chain retaining plate. The end part 31a having an L-shape prevents the camshaft timing chain 10 from falling off the drive sprocket 7 in an axial direction. A middle part of the push plug holding plate 31 is applied to the outer end of the coil spring 30 to press the push plug 29. An opening through which a bolt is passed is formed in a base part of the push plug holding plate 31. As shown in Fig. 2, the edge 31b of the end part 31a is curved in a concave circular arc corresponding to the circumscribed circle of the drive sprocket 7. Since the push plug holding plate 31 is used for two purposes, the number of parts and assembling work can be reduced.

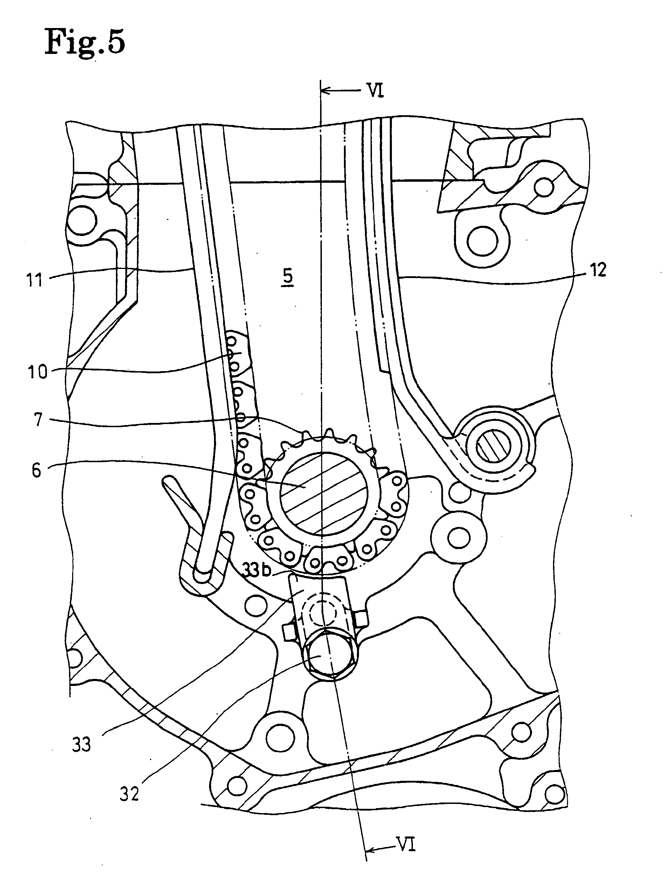

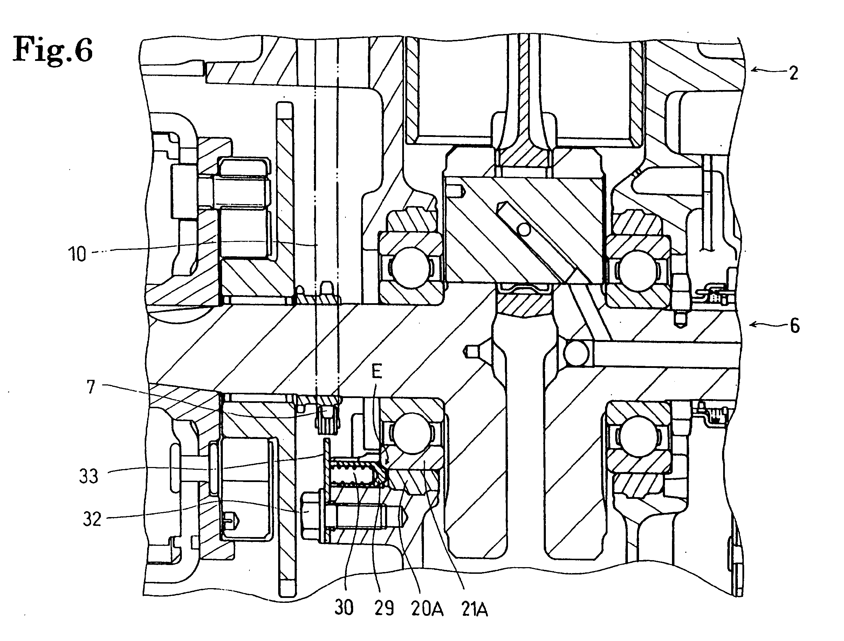

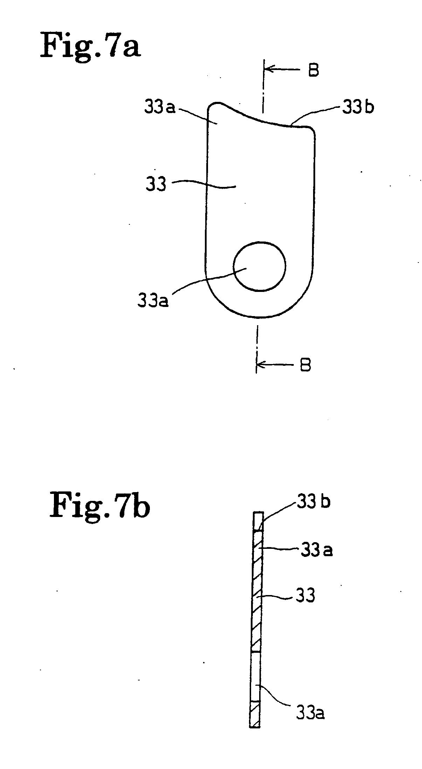

Fig. 5 is a sectional view of an OHC internal combustion engine for a motorcycle, provided with a camshaft timing chain retaining mechanism in a second embodiment of the present invention taken on a plane in front of a camshaft timing chain, Fig. 6 is a sectional view taken on line VI-VI in Fig. 5, and Figs. 7a and 7b are a front elevation and a longitudinal sectional view, respectively, of the camshaft timing chain retaining plate in the second embodiment. The second embodiment is similar to the first embodiment, except that a push plug holding plate 33 serving also as a camshaft timing chain retaining plate included in the second embodiment is different from the push plug holding plate 31 of the first embodiment. In Figs. 5, 6, 7a and 7b, parts like or corresponding to those of the first embodiment are denoted by the same reference characters. The push plug holding plate 33 is short, has a straight end part 33a and is a substantially flat plate. An opening through which a bolt is passed is formed in a base part of the push plug holding plate 33. The edge 33b of the end part 33a, similarly to the edge 31b of the push plug holding plate 31, is curved in a concave circular arc.

The position of the push plug holding plate 33 on the internal combustion engine for holding the push plug is similar to that of the push plug holding plate 33 of the first embodiment for the same purpose. The position of the push plug holding plate 33 on the internal combustion engine for retaining the camshaft timing chain on the drive sprocket 7 is different from that of the push plug holding plate 31 of the first embodiment for the same purpose. The push plug holding plate 33 is disposed with the edge 33b of the end part 33a thereof disposed close to the circumscribed circle of the drive sprocket 7.

The push plug holding function of the push plug holding plate 33 of the second embodiment is the same as that of the push plug holding plate 31 of the first embodiment. The push plug holding plate 33 prevents the camshaft timing chain 10 from falling off the drive sprocket 7 in a diametrically outward direction. The push plug holding plate 33 is more effective than the push plug holding plate 31 in preventing the camshaft timing chain 10 from falling off the drive sprocket 7.

## Claims

1. A camshaft timing chain retaining mechanism for retaining a camshaft timing chain (10) included in a valve train included in an OHC internal combustion engine on a drive sprocket (7) mounted on a crankshaft (6) supported for rotation by rolling bearings (21A,21B) on a crankcase (2), said camshaft timing chain retaining mechanism comprising a camshaft timing chain retaining plate (31) disposed near the drive sprocket (7) ;
**characterized in that** the camshaft timing chain retaining plate (31) is capable of serving also as a push plug holding plate for holding a push plug (29) pressed against the rolling bearing (21A) to restrain the rolling bearing (21A) from axial movement.

2. The camshaft timing chain retaining mechanism according to claim 1, **characterized in that** the camshaft timing chain retaining plate (31) has a main part fixed to the crankcase (2) so as to be in contact with the push plug (29), and an end part extending from the main part to a position beside the drive sproket (7).

3. The camshaft timing chain retaining mechanism according to claim 2, **characterized in that** the end part of the camshaft timing chain retaining plate is bent in an L-shape.

4. The camshaft timing chain retaining mechanism according to claim 1, **characterized in that** the camshaft timing chain retaining plate has a main part fixed to the crankcase (2) so as to be in contact with the push plug (28), and an end part extending from the main part to a position diametrically near the drive sprocket (7).

## Patentansprüche

1. Sicherungsmechanismus für eine Nockenwellensteuerkette zum Halten einer in einem Ventiltrieb in einem OHC-Verbrennungsmotor befindlichen Nockenwellensteuerkette (10) auf einem Antriebsritzel (7), das an einer durch die Wälzlager (21A, 21B) auf einem Motorgehäuse (2) drehbar gelagerten Kurbelwelle (6) befestigt ist, wobei der Sicherungsmechanismus für die Nockenwellensteuerkette eine Sicherungsplatte (31) für die Nockenwellensteuerkette umfasst, welche sich nahe dem Antriebsritzel (7) befindet;
**dadurch gekennzeichnet, dass**
die Sicherungsplatte (31) für die Nockenwellensteuerkette auch als Steckblenden-Halteplatte dienen kann, die eine Steckblende (29) gegen das Wälzlager (21A) gedrückt hält, damit eine axiale Bewegung des Wälzlagers (21A) unterdrückt wird.

2. Sicherungsmechanismus für eine Nockenwellensteuerkette nach Anspruch 1,
**dadurch gekennzeichnet, dass**
die Sicherungsplatte (31) für die Nockenwellensteuerkette ein Hauptbauteil aufweist, das so an dem Motorgehäuse (2) befestigt ist, dass es in Kontakt mit der Steckblende (29) ist, sowie ein Endbauteil, das von dem Hauptbauteil zu einer Stelle neben dem Antriebsritzel (7) verläuft.

3. Sicherungsmechanismus für eine Nockenwellensteuerkette nach Anspruch 2,
**dadurch gekennzeichnet, dass**
das Endbauteil der Sicherungsplatte (31) für die Nockenwellensteuerkette L-förmig gebogen ist.

4. Sicherungsmechanismus für eine Nockenwellensteuerkette nach Anspruch 1,
**dadurch gekennzeichnet, dass**
die Sicherungsplatte (31) für die Nockenwellensteuerkette ein Hauptbauteil aufweist, das so an dem Motorgehäuse (2) befestigt ist, dass es in Kontakt mit der Steckblende (29) ist, sowie ein Endbauteil, das von dem Hauptbauteil zu einer Stelle diametral neben dem Antriebsritzel (7) verläuft.

## Revendications

1. Mécanisme de retenue de chaîne de distribution d'arbre à cames pour retenir une chaîne de distribution d'arbre à cames (10), incluse dans un train de soupapes inclus dans un moteur à combustion interne à arbre à cames en tête, sur un pignon d'entraînement (7) monté sur un vilebrequin (6) supporté de manière rotative par des roulements à éléments roulants (21A, 21B) sur un carter de vilebrequin (2), ledit mécanisme de retenue de chaîne de distribution d'arbre à cames comprenant une plaque de retenue de chaîne de distribution d'arbre à cames (31) disposée à proximité du pignon d'entraînement (7),
**caractérisé en ce que** la plaque de retenue de chaîne de distribution d'arbre à cames (31) est susceptible de servir également de plaque de maintien de bouchon de poussée pour maintenir un bouchon de poussée (29) pressé contre le roulement à éléments roulants (21A) pour empêcher un déplacement axial du roulement à éléments roulants (21 A).

2. Mécanisme de retenue de chaîne de distribution d'arbre à cames selon la revendication 1, **caractérisé en ce que** la plaque de retenue de chaîne de distribution d'arbre à cames (31) comporte une partie principale fixée au carter de vilebrequin (2) de manière à être en contact avec le bouchon de poussée (29) et une partie d'extrémité s'étendant à partir de la partie principale jusqu'à une position à côté du pignon d'entraînement (7).

3. Mécanisme de retenue de chaîne de distribution d'arbre à cames selon la revendication 2, **caractérisé en ce que** la partie d'extrémité de la plaque de retenue de chaîne de distribution d'arbre à cames est recourbée en forme de L.

4. Mécanisme de retenue de chaîne de distribution d'arbre à cames selon la revendication 1, **caractérisé en ce que** la plaque de retenue de chaîne de distribution d'arbre à cames comporte une partie principale fixée au carter de vilebrequin (2) de manière à être en contact avec le bouchon de poussée (29) et une partie d'extrémité s'étendant à partir de la partie principale jusqu'à une position diamétralement proche du pignon d'entraînement (7).
